# EUROPÄISCHE PATENTSCHRIFT

(11) **EP 1 976 726 B1**
(45) Veröffentlichungstag und Bekanntmachung des Hinweises auf die Patenterteilung: **29.04.2009**
(21) Anmeldenummer: 06806709.9
(22) Anmeldetag: 08.11.2006
(51) Int. Cl.: B60R 13/04

(54) **VORRICHTUNG ZUM ABDECKENE EINER IN EINER ABDECKLEISTE AUSGEBILDETEN AUSNEHMUNG**
DEVICE FOR COVERING A RECESS FORMED IN A COVERING STRIP
DISPOSITIF de recouvrement d'une découpe formée dans une languette de recouvRement

(30) Priorität: 13.01.2006 DE 102006001742
(43) Veröffentlichungstag der Anmeldung: 08.10.2008
(73) Patentinhaber: A. RAYMOND ET CIE, 38000 Grenoble (FR)
(72) Erfinder: COCHARD, Mathieu, F-38700 La Tronche (FR)
(74) Vertreter: Rüttgers, Joachim
(86) Internationale Anmeldenummer: PCT/EP2006/010689
(87) Internationale Veröffentlichungsnummer: WO 2007/087844

(56) Entgegenhaltungen:
- EP-A1- 0 968 882
- DE-A1- 19 840 294

## Beschreibung

Die Erfindung betrifft eine Vorrichtung gemäß dem Oberbegriff des Patentanspruches 1.

Eine derartige Vorrichtung ist aus der DE 198 40 294 A1 und der EP0968 882 A1 bekannt. Diese Vorrichtung verfügt zum Abdecken einer in einer Abdeckleiste bei einem Fahrzeugdach ausgebildeten Ausnehmung über eine um eine Längsachse drehbare Klappe und über eine Lageranordnung zum Halten der Klappe in endseitigen Lagerbereichen. Die Lageranordnung verfügt über zwei spiegelsymmetrisch ausgebildete Lagerböcke, die jeweils mit zwei quer zur Längsrichtung der Klappe ausgerichteten Stegteilen ausgebildet sind. In jedem Stegteil ist eine Nut eingebracht, in die Lagerzapfen der Klappe einfügbar sind, so dass die Lagerklappe drehbar gehalten ist. Die Lagerböcke sind über ein sich über die Längsrichtung der Klappe erstreckendes Verbindungsteil relativ materialaufwändig miteinander verbunden, so dass nach Eindrücken der Lagerzapfen der Klappe in die Nuten die Vorrichtung als Einheit handhabbar ist.

Der Erfindung liegt die Aufgabe zugrunde, eine Vorrichtung der eingangs genannten Art anzugeben, die sich mit einem verhältnismäßig geringen Materialaufwand in einfacher Art und Weise als Einheit handhaben lässt.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung die Lagerzapfen in die Lagerhülsen einfügbar sind, die sie zweckmäßigerweise höchstens bis auf einen gewissen Restspalt im wesentlichen vollständig umschließen, und dass die Rastnasen die Lagerhülsen randseitig hintergreifen, sind die einzelnen Teile der Lageranordnung, beispielsweise zwei die Lagerhülsen aufnehmende Lagerböcke, über die Klappe miteinander verbunden, so dass die Vorrichtung als Einheit handhabbar ist, auch wenn die Lageranordnung selbst aus zwei separaten Teilen besteht.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Vorrichtung zum Abdecken einer Ausnehmung in einer Abdeckleiste eines Fahrzeugdaches in einer mit der Abdeckleiste verbundenen Anordnung sowie mit einer die Ausnehmung verschließenden Schließstellung der Klappe,
- Fig. 2: in einer perspektivischen Explosionsansicht das Ausführungsbeispiel gemäß Fig. 1 mit zwei identisch aufgebauten und sowohl für einen Rechtseinbau als auch für einen Linkseinbau symmetrisch ausgestalteten Lagerböcken sowie der Klappe in einer aufgestellten Offenstellung und
- Fig. 3: in einer vergrößerten Ansicht einen Lagerbock des Ausführungsbeispiels gemäß Fig. 1 und Fig. 2.

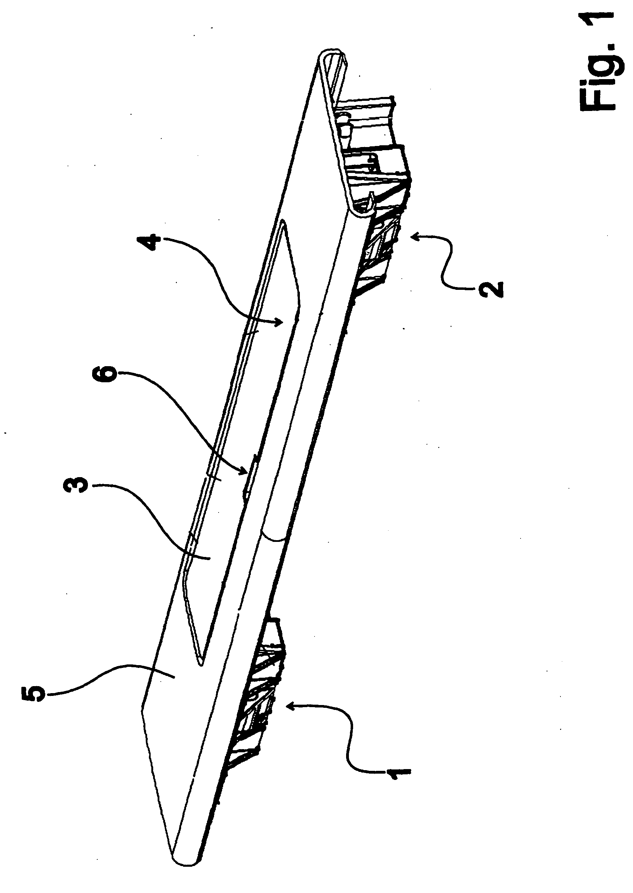

Fig. 1 zeigt in einer perspektivischen Ansicht ein Ausführungsbeispiel einer erfindungsgemäßen Vorrichtung, die über eine Lageranordnung mit zwei aus einem hartelastischen Kunststoff gefertigten Lagerböcken 1, 2 und über eine ebenfalls aus einem hartelastischen Kunststoff gefertigte, drehbare längliche Klappe 3 verfügt. Die Lagerböcke 1, 2 sind dazu eingerichtet, in eine Dachleistenrinne eines Fahrzeugdaches einfügbar und mit einer eine abzudeckende Ausnehmung 4 aufweisenden Abdeckleiste 5 des Fahrzeugdaches verbindbar zu sein. In der in Fig. 1 dargestellten Schließstellung der Klappe 3 ist die Ausnehmung 4 bündig verschlossen, wobei an der Klappe 3 zum Erleichtern des Überführens der Klappe 3 in eine aufgestellte Offenstellung an einer Eingriffsseite eine schmale Eingriffsnut 6 beispielsweise zum Ansetzen der Klinge eines Schraubendrehers zum Aufhebein der Klappe 3 ausgebildet ist.

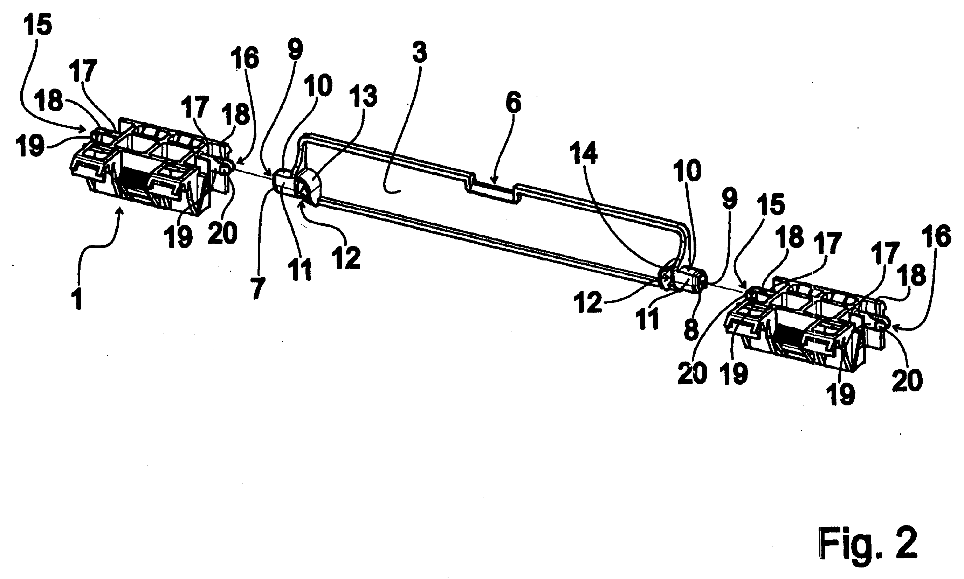

Fig. 2 zeigt in einer perspektivischen Explosionsansicht das Ausführungsbeispiel gemäß Fig. 1 mit der Klappe 3 in einer rechtwinklig zu der Schließstellung gemäß Fig. 1 ausgerichteten, aufgestellten Offenstellung. Aus Fig. 2 ist ersichtlich, dass an der Klappe 3 an beiden Stirnseiten randseitig jeweils eine umfänglich geschlossene Lagerhülse 7, 8 angesetzt ist, die miteinander fluchten und jeweils einen in die Längsrichtung auf beiden Seiten offenen zylinderförmigen Zapfenaufnahmeraum 9 aufweisen. Jede Lagerhülse 7, 8 verfügt außenseitig über eine erste Flachseite 10 und eine zweite Flachseite 11, die rechtwinklig zueinander ausgerichtet sind, wobei die ersten Flachseiten 10 rechtwinklig zu der Oberseite der Klappe 3 und die zweiten Flachseiten 11 parallel zu der Oberseite der Klappe 3 angeordnet sind. An den aufeinander zu weisenden Seiten der Lagerhülsen 7, 8 sind an der Klappe 3 jeweils einen Nasenaufnahmeraum 12 umschließende bogenartige Schutzstege 13, 14 ausgebildet, die die direkte Verbindung zwischen den Lagerhülsen 7, 8 in Längsrichtung unterbrechen.

Weiterhin lässt sich Fig. 2 entnehmen, dass jeder Lagerbock 1, 2 mit zwei Lagerzapfen 15, 16 ausgestattet ist, die einander gegenüberliegen und mit ihren freien Enden voneinander wegweisend miteinander fluchtend in Längsrichtung der Klappe 3 angeordnet sind. Jeder Lagerzapfen 15, 16 weist eine Länge auf, die etwas kleiner als der Abstand zwischen der von der Klappe 3 wegweisenden Randseite einer Lagerhülse 7, 8 und einem Schutzsteg 13, 14 ist. Jeder Lagerzapfen 15,16 verfügt weiterhin über einen im wesentlichen zylinderförmigen Anbindungsabschnitt 17 aus Vollmaterial und sich von dem Anbindungsabschnitt 17 von dem jeweiligen Lagerbock 1. 2 weg nach außen erstreckende federnde Gabelschenkel 18, 19, die jeweils mit einer radial nach außen weisenden Rastnase 20 ausgebildet sind. Der Außendurchmesser der Lagerzapfen 15, 16 im Bereich der Anbindungsabschnitte 17 sowie der Gabelschenkel 18, 19 entspricht im wesentlichen dem Innendurchmesser der Lagerhülsen 7, 8, wobei der Abstand zwischen dem von den Gabelschenkeln 18, 19 wegweisenden Ende des Anbindungsabschnittes 17 und der Stirnseite einer Rastnase 20 im wesentlichen der Länge einer Lagerhülse 7, 8 entspricht. Die Rastnasen 20 wiederum weisen in Längsrichtung eine Dimension auf, die kleiner als der Abstand zwischen den aufeinander zu weisenden Stirnseiten der Lagerhülsen 7, 8 und den Schutzstegen 13, 14 ist.

Somit sind die Lagerzapfen 15, 16 in die Lagerhülsen 7, 8 einfügbar, bis die Rastnasen 20 die aufeinander zu weisenden Stirnseiten der Lagerhülsen 7, 8 hintergreifen und somit die Lagerböcke 1, 2 mit der Klappe 3 verbunden sind. Die Schutzstege 13, 14 bieten den Rastnasen 20 beziehungsweise den freien Enden der Gabelschenkel 18, 19 einen gewissen Schutz vor unbeabsichtigter Zerstörung, um die Verbindung zwischen den Lagerböcken und der Klappe 3 auch bei in der Regel rauen Betriebsumständen eines Kraftfahrzeuges möglichst störungssicher zu gestalten.

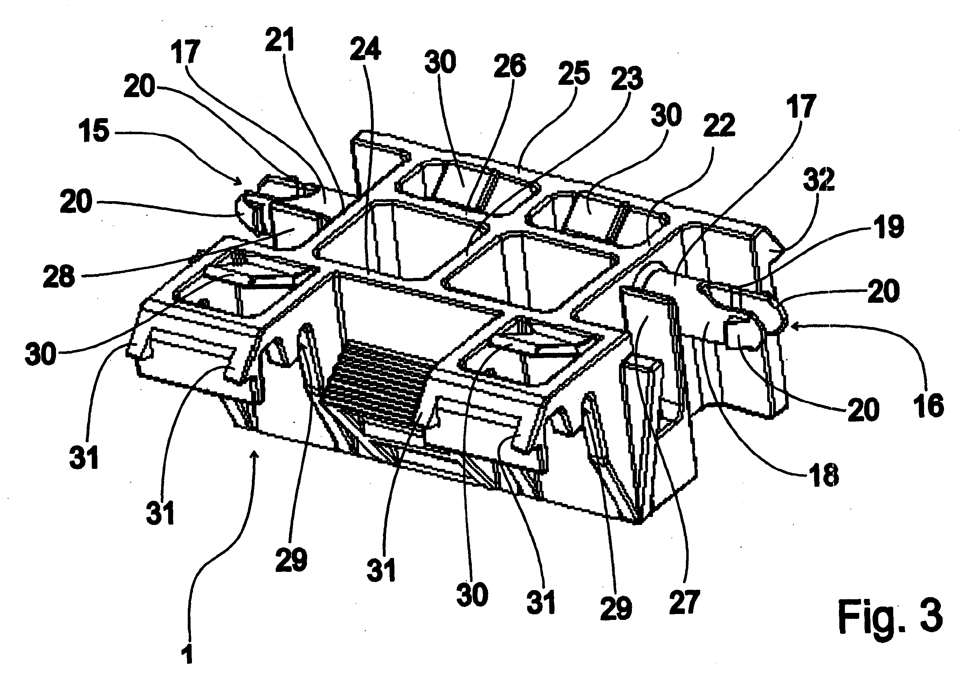

Fig. 3 zeigt in einer gegenüber dem Maßstab von Fig. 1 und Fig. 2 vergrößerten Darstellung einen der Lagerböcke 1, 2 der erfindungsgemäßen Vorrichtung. Aus Fig. 3 ist ersichtlich, dass die Lagerböcke 1, 2 als Grundgerüst über eine Anzahl von rechtwinklig zueinander ausgerichteten außenseitigen und innenseitigen Querstegen 21, 22, 23 sowie außenseitigen und innenseitigen Längsstegen 24, 25, 26 verfügen, wobei die außenseitigen Querstege 21, 22 so weit nach innen versetzt sind, dass zwischen den Lagerzapfen 15, 16 und dem außenseitigen überstehenden Längssteg 24 jeweils eine blattartige Anlagezunge 27, 28 angeordnet ist. Jede Anlagezunge 27, 28 weist von dem ihr direkte gegenüberliegenden Lagerzapfen 15, 16 einen Abstand auf, der so eingerichtet ist, dass die Anlagezunge 27, 28 mit einer Vorspannung an den Flachseiten 10, 11 der mit dem jeweiligen Lagerzapfen 15,16 in Eingriff befindlichen Lagerhülsen 7, 8 anliegt und die Klappe 3 somit in der Schließstellung beziehungsweise der Offenstellung hält, wobei bei Überführen der Klappe 3 zwischen der Offenstellung und der Schließstellung durch den zwischen den Flachseiten 10, 11 ausgebildeten Übergangsbereich mit größerem Radialabstand zu der Mittelachse der Lagerhülse 7, 8 ein Übergangswiderstand vorhanden ist, der mit einem erhöhten Kraftauf wand überwunden werden muss, bevor ein Stellungswechsel der Klappe 3 erfolgt.

Weiterhin lässt sich Fig. 3 entnehmen, dass die Lagerböcke 1, 2 über nutartige Befestigungsstegaufnahmen 29 zur Aufnahme eines mit dem Fahrzeugdach verbundenen Befestigungssteges und über in der Darstellung gemäß Fig. 3 nach oben in Richtung einer Abdeckleiste 5 überstehende Spannzungen 30 zur Anlage an einer mit Randnasen 31 beziehungsweise einer Randnasenleiste 32 als längsseitigen Vorsprüngen verklipsbaren Abdeckleiste 5 verfügen, um einen spielfreien und gegen Erschütterungen gesicherten Sitz der Abdeckleiste 5 an den Lagerböcken 1, 2 zu gewährleisten.

## Patentansprüche

1. Vorrichtung zum Abdecken einer in einer Abdeckleiste (5) ausgebildeten Ausnehmung (4) mit einer um eine Längsachse drehbaren Klappe (3) und mit einer Lageranordnung zum Halten der Klappe (3) in endseitigen Lagerbereichen, **dadurch gekennzeichnet, dass** Lagerzapfen (15, 16) mit endseitigen federnden Gabelschenkeln (18, 19) vorhanden sind, wobei wenigstens ein Gabelschenkel (18, 19) mit einer endseitigen Rastnase (20) ausgebildet ist, und dass Lagerhülsen (7, 8) ausgebildet sind, die jeweils einen sich in Richtung der Längsachse der Klappe (3) erstreckenden Zapfenaufnahmeraum (9) aufweisen, in den ein Lagerzapfen (15,16) bis zum Hintergreifen einer Randseite der Lagerhülse (7, 8) durch eine Rastnase (20) einfügbar ist.

2. Vorrichtung nach Anspruch 1, **dadurch gekennzeichnet, dass** an jedem Gabelschenkel (18, 19) eine Rastnase (20) ausgebildet ist.

3. Vorrichtung nach Anspruch 1 oder Anspruch 2, **dadurch gekennzeichnet, dass** die Lagerzapfen (15, 16) an jeweils einem Lagerbock (1, 2) der Lageranordnung und die Lagerhülsen (7, 8) an der Klappe (3) ausgebildet sind.

4. Vorrichtung nach Anspruch 3, **dadurch gekennzeichnet, dass** die Lagerhülsen (7, 8) endseitig über die Klappe (3) vorstehen.

5. Vorrichtung nach Anspruch 3 oder Anspruch 4, **dadurch gekennzeichnet, dass** an wenigstens einer Lagerhülse (7, 8) außenseitig zueinander rechtwinklig ausgerichtete Flachseiten (10, 11) ausgebildet sind, und dass die Lagerböcke (1, 2) eine im Bereich der mit Flachseiten (10, 11) ausgebildeten Lagerhülse (7, 8) angeordnete federnde Anlagezunge (27, 28) aufweist, die in einer die Ausnehmung (4) verschließenden Schließstellung sowie in einer aufgestellten Offenstellung der Klappe (3) mit Vorspannung an jeweils einer der Flachseiten (10, 11) anliegt.

6. Vorrichtung nach einem der Ansprüche 3 bis 5, **dadurch gekennzeichnet, dass** jeder Lagerbock (1, 2) zwei einander gegenüberliegende und voreinander wegweisende Lagerzapfen (15, 16) aufweist.

7. Vorrichtung nach einem der Ansprüche 3 bis 6, **dadurch gekennzeichnet, dass** an der Klappe (3) für jede Lagerhülse (7, 8) ein Schutzsteg (13, 14) ausgebildet ist, wobei die Schutzstege (13, 14) auf der der Austrittsseite der Lagerzapfen (15, 16) zugewandten Seite der jeweiligen Lagerhülse (7, 8) angeordnet sind und das Ende der Lagerzapfen (15, 16) wenigstens abschnittsweise umschließen.

## Claims

1. Device for covering a recess (4) formed in a covering strip (5), comprising a flap (3) rotatable about a longitudinal axis and comprising a bearing arrangement for holding the flap (3) in end bearing regions, **characterized in that** bearing journals (15, 16) having springy fork legs (18, 19) at the end are present, at least one fork leg (18, 19) being formed with an end detent (20), and **in that** bearing sleeves (7, 8) are formed which in each case have a journal-receiving space (9) which extends in the direction of the longitudinal axis of the flap (3) and into which a bearing journal (15, 16) can be inserted until a detent (20) grips behind an edge of the bearing sleeve (7, 8).

2. Device according to Claim 1, **characterized in that** a detent (20) is formed on each fork leg (18, 19).

3. Device according to Claim 1 or Claim 2,
**characterized in that** the bearing journals (15, 16) are formed on in each case a bearing block (1, 2) of the bearing arrangement and the bearing sleeves (7, 8) are formed on the flap (3).

4. Device according to Claim 3, **characterized in that** the bearing sleeves (7, 8) project beyond the flap (3) at the ends.

5. Device according to Claim 3 or Claim 4,
**characterized in that** flat sides (10, 11) oriented at right angles to one another are formed on the outside of at least one bearing sleeve (7, 8),and **in that** the bearing blocks (1, 2) have a springy stop tongue (27, 28) which is arranged in the region of the bearing sleeve (7, 8) formed with flat sides (10, 11) and which rests with pretension against in each case one of the flat sides (10, 11) in a closed position in which the recess (4) is closed and in an open position in which the flap (3) is upright.

6. Device according to any of Claims 3 to 5,
**characterized in that** each bearing block (1, 2) has two bearing journals (15, 16) opposite one another and pointing away from one another.

7. Device according to any of Claims 3 to 6,
**characterized in that** a protective web (13, 14) is formed on the flap (3) for each bearing sleeve (7, 8), the protective webs (13, 14) being arranged on that side of the respective bearing sleeve (7, 8) which faces the exit side of the bearing journals (15, 16) at least in sections.

## Revendications

1. Dispositif d'obturation d'un évidement (4) ménagé dans une baguette de recouvrement (5) au moyen d'un rabat (3) capable de pivoter suivant son axe longitudinal et d'un agencement formant portées d'appui destiné à maintenir le rabat (3) en position dans ses portions d'appui d'extrémité, **caractérisé en ce qu'**il est prévu des tourillons (15, 16) munis à leurs extrémités de branches élastiques formant chape (18, 19), au moins une branche formant chape (18, 19) étant en l'occurrence munie à son extrémité d'un talon d'accrochage (20) et **en ce qu'**il est prévu des douilles formant portées (7, 8) qui définissent respectivement un gabarit d'emmanchement de tourillon (9) s'étendant dans la direction de l'axe longitudinal du rabat (3), dans lequel un tourillon (15, 16) est destiné à être inséré jusqu'à ce qu'un talon d'accrochage (20) vienne cramponner par derrière un rebord latéral de la douille formant portée (7, 8).

2. Dispositif selon la revendication 1, **caractérisé en ce que** chaque branche formant chape (18, 19) est munie d'un talon d'accrochage (20).

3. Dispositif selon la revendication 1 ou la revendication 2, **caractérisé en ce que** les tourillons (15, 16) font respectivement partie d'un palier (1, 2) de l'agencement formant portée d'appui et les douilles formant portée (7, 8) font partie du rabat (3).

4. Dispositif selon la revendication 3, **caractérisé en ce que** les douilles formant portées (7, 8) font, au niveau de leurs extrémités, saillie au-dessus du rabat (3).

5. Dispositif selon la revendication 3 ou la revendication 4, **caractérisé en que** qu'au moins une douille formant portée (7, 8) comporte des méplats (10, 11) orientés à l'extérieur selon une disposition perpendiculaire l'un par rapport à l'autre et en ce que les paliers (1,2) comportent une languette d'appui élastique (27, 28) disposée dans la zone correspondant aux douilles formant portées (7, 8) munies de méplats (10, 11), qui vient en contact d'appui, avec une précontrainte, respectivement contre un des méplats (10, 11) dans une position fermée d'obturation de l'évidement (4) ainsi que dans une position relevée d'ouverture du rabat (3).

6. Dispositif selon l'une des revendications 3 à 5, **caractérisé en ce que** chaque palier (1,2) comporte deux tourillons (15, 16) diamétralement opposés et orientés vers l'extérieur l'un par rapport à l'autre.

7. Dispositif selon l'une des revendications 3 à 6, **caractérisé en ce que** le rabat (3) comporte, pour chaque douille formant portée (7, 8), une barrette entretoise de protection (13, 14), lesdites barrettes entretoises de protection (13, 14) étant en l'occurrence disposées sur le côté orienté vers le côté extérieur des tourillons (15, 16) de la douille formant portée respective (7, 8) et entourant les tourillons (15, 16) au moins sur une portion de ceux-ci.
